# EUROPÄISCHE PATENTANMELDUNG

(11) **EP 0 609 700 A1**
(43) Veröffentlichungstag der Anmeldung: **10.08.1994**
(21) Anmeldenummer: 94100727.0
(22) Anmeldetag: 19.01.1994
(51) Int. Cl.: C03C 17/00

(54) **Verwendung oder Anordnung einer die langwellige Strahlung gering emittierenden Beschichtung auf Oberflächen, insbesondere von Gebäuden**

(30) Priorität: 28.01.1993 DE 4302375
(71) Anmelder: Josef Gartner & Co., D-89421 Gundelfingen (DE)
(72) Erfinder: Gartner, Fritz, Dr., D-89421 Gundelfingen (DE)
(74) Vertreter: Müller-Boré & Partner Patentanwälte

(57) **Zusammenfassung**

Zur Vermeidung der Vereisung von Teilen und Elementen beispielsweise einer Fassade wird es vorgeschlagen, eine die langwellige Strahlung für Wellenlängen größer als 2,5 µm gering emittierende Beschichtung auf der Außenseite bzw. Wetterseite dieser Teile anzuordnen.

## Beschreibung

Die Erfindung betrifft eine bestimmte Verwendung beschichteter Teile oder Elemente sowie eine Anordnung einer Beschichtung auf Oberflächen von Teilen oder Elementen.

Bei niedrigen Außenlufttemperaturen besteht bei sämtlichen Teilen oder Elementen, die mit der Außenluft in Berührung sind, die Gefahr einer Kondensatbildung bzw. Vereisung und zwar gewöhnlich auf deren der Außenseite bzw. Wetterseite zugewandten Oberflächen. Um die Kondensatbildung bzw. Vereisung zu vermeiden oder zumindest erst bei sehr niedrigen Temperaturen zuzulassen, sind verschiedene Lösungen bekannt. Bei Glasscheiben können beispielsweise die diesen benachbart angeordneten Elemente einer Fassade raumseitig beheizt sein. Die an die Scheiben abgegebene Wärme vermeidet Kondensatbildung und Vereisung oder begrenzt diese zumindest auf sehr niedrige Temperaturen. Auch ist es - beispielsweise bei Autoscheiben - bekannt, Heizdrähte beispielsweise an der raumseitigen Oberfläche der Glasscheiben anzuordnen. Ferner ist es bekannt, vorgewärmte Luft an der raumseitigen Oberfläche von Glasscheiben vorbeistreichen zu lassen. Alle vorgenannten Methoden bedingen jedoch Zusatzeinrichtungen und vor allem eines mehr oder minder großen Energiebedarfs.

Vor allem jedoch tritt durch Kondensatbildung eine starke Verschmutzung der Oberflächen ein, während die Vereisung beim Schmelzen durch Herabfallen eine Gefahr darstellt.

Es ist Aufgabe der vorliegenden Erfindung, auf einfache Art und Weise die Kondensatbildung bzw. das Vereisen von Teilen oder Elementen, die insbesondere mit der Außenluft in Berührung sind, zu verhindern oder zumindest nur bei sehr niedrigen Temperaturen zuzulassen.

Dazu wird vorgeschlagen, eine die langwellige Strahlung für Wellenlängen größer als 2,5 µm gering emittierende Beschichtung auf den außen- bzw. wetterseitigen Oberflächen dieser Teile oder Elemente anzuordnen. Solchermaßen beschichtete Teile sollen demnach im eingebauten Zustand die Beschichtung auf der Außenseite bzw. der Wetterseite aufweisen. Mit der Beschichtung soll ein Strahlungsaustausch im langwelligen Bereich, der unter anderem auch als Wärmestrahlung/Temperaturstrahlung bezeichnet wird, also Wellenlängen von 2,5-400 µm, vermindert werden. Mit der vorgeschlagenen Beschichtung soll ein Emissionsgrad für langwellige Strahlung von kleiner 0,9, vorzugsweise von 0,9 - 0,2 und besonders bevorzugt von kleiner 0,2 erreicht werden. Die Beschichtung soll insbesondere langlebig und wetterbeständig sowie ohne Schaden zu nehmen leicht zu reinigen sein.

Die Ursache dafür, daß sich die Oberflächen der entsprechenden Teile unter den Taupunkt der Außenluft abkühlen, liegt an der langwelligen Abstrahlung an die Umgebung, zum Beispiel an andere Häuser, Fahrzeuge, Geräte und insbesondere an die Atmosphäre. Prinzipiell findet eine Abgabe langwelliger Strahlung von einer Oberfläche an alle anderen Flächen und Gegenstände statt, deren Temperatur niedriger als die der entsprechenden Oberfläche ist. Oberflächen, die direkt oder teilweise der Atmosphäre gegenüberliegend angeordnet sind, geben deshalb, insbesondere bei klarem Himmel an die Atmosphäre Wärme mittels langwelliger Strahlung ab.

Die Kondensatbildung bzw. bei Oberflächentemperaturen unter 0° Celsius die Vereisung werden durch eine Abkühlung der äußeren Oberflächen der entsprechenden Teile unter den Taupunkt der Außenluft verursacht. Die mit der entsprechenden Oberfläche in Verbindung stehende Luft wird dann abgekühlt, wodurch der Taupunkt unterschritten werden kann. Je stärker die Teile raumseitig isoliert sind, desto weniger werden die entsprechenden Teile raumseitig mit Wärme versorgt. Sie kühlen demnach stärker aus als raumseitig schlecht wärmeisolierte Teile.

Der Grundgedanke der vorliegenden Erfindung besteht darin, den Austausch langwelliger Strahlung herabzusetzen.

Die vorgeschlagene Maßnahme in Form einer für langwellige Strahlung gering emittierenden Beschichtung kann bei allen erdenklichen Teilen und Elementen vorgenommen werden, bei denen eine Kondensatbildung bzw. Vereisung verhindert werden soll und welche grundsätzlich mit der Außenluft in Berührung sind. Insbesondere würde es sich bei den sogenannten Teilen um Glasscheiben aller Art handeln, also um vorgespanntes, teilvorgespanntes oder Floatglas sowie auch um Plexiglas. Aber auch andere Teile, wie zum Beispiel Bleche von Paneelen einer Fassadenverkleidung aus Aluminium, Edelstahl, Stahl oder anderen Materialien können mit der erfindungsgemäßen Beschichtung wetterseitig versehen werden. Auch Pfosten, Riegel oder andere tragende oder nicht tragende Rahmenteile von Fassaden können entsprechend beschichtet sein.

Mit der vorgeschlagenen Anordnung bzw. Verwendung der Beschichtung kann somit auf einfache und insbesondere auch kostengünstige Weise Abhilfe gegen die Kondensatbildung bzw. Vereisung der entsprechenden Teile oder Elemente geschaffen werden.

Die entsprechenden Teile oder Elemente können - wie oben bereits angedeutet - für sichtbare Strahlung transparent oder nicht transparent sein. Die Anordnung der Beschichtung ist also letzlich unabhängig von dem Material der entsprechenden Teile oder Elemente.

Bei der Verwendung transparenter Teile oder Elemente ist die Beschichtung vorzugsweise für sichtbare Strahlung transparent, insbesondere hochtransparent.

Die Beschichtung an sich besteht vorzugsweise aus einer Wärmeschutzbeschichtung. Eine wetterseitig angeordnete, langwellige Strahlung gering emittierende Beschichtung - vorzugsweise in Form einer Wärmeschutzbeschichtung zur Vermeidung von Kondensat bzw. einer Vereisung - hat daneben auch im Hinblick auf den Wärmeschutz positive Wirkung, da die Wärmeabgabe der Oberfläche an die Umgebung reduziert wird.

Sofern es sich bei den Teilen um Scheiben handelt, können diese beispielsweise aus Floatglass, Verbund-Sicherheitsglas (VSG), Einscheiben-Sicherheitsglas (ESG) oder teilvorgespanntem Glas (TVG) bestehen. Die vorgeschlagene Beschichtung kann somit auf den Oberflächen der einschlägig bekannten Glasarten vorhanden sein.

## Patentansprüche

1. Verwendung einer, eine die langwellige Strahlung für Wellenlängen größer als 2,5 µm gering emittierenden Beschichtung an außen- bzw. wetterseitigen Oberflächen von Teilen oder Elementen eines Gebäudes, einer Fassade, eines Fahrzeuges, einer Vorrichtung oder/und eines Gerätes, bei denen die Möglichkeit einer Kondensatbildung oder Vereisung an deren wetterseitiger Oberfläche besteht.

2. Anordnung einer die langwellige Strahlung für Wellenlängen größer als 2,5 µm gering emittierenden Beschichtung auf den außen- bzw. wetterseitigen Oberflächen von Teilen oder Elementen eines Gebäudes, einer Fassade, eines Fahrzeugs, einer Vorrichtung und/oder eines Gerätes, bei denen die Möglichkeit einer Kondensatbildung oder Vereisung an deren wetterseitigen Oberflächen besteht.

3. Verwendung oder Anordnung nach Anspruch 1 oder 2, bei welcher die Teile oder Elemente für sichtbare Strahlung teiltransparent oder nicht transparent sind.

4. Verwendung oder Anordnung nach einem der Ansprüche 1 bis 3, bei welcher bei teiltransparenten Teilen oder Elementen die Beschichtung für sichtbare Strahlung transparent, insbesondere hoch transparent ist.

5. Verwendung oder Anordnung nach einem der Ansprüche 1 bis 4, bei welcher die Beschichtung aus einer Wärmeschutzbeschichtung besteht.
